# EUROPÄISCHE PATENTANMELDUNG

(11) **EP 2 436 599 A2**
(43) Veröffentlichungstag der Anmeldung: **04.04.2012**
(21) Anmeldenummer: 11007943.1
(22) Anmeldetag: 30.09.2011
(51) Int. Cl.: B64D 11/00, B64D 11/04

(54) **Halterung für Inneneinrichtungskomponenten in Flugzeugkabinen**

(30) Priorität: 02.10.2010 DE 102010047385
(71) Anmelder: Technische Universität Hamburg-Harburg, 21073 Hamburg (DE); TuTech Innovation GmbH, 21079 Hamburg (DE)
(72) Erfinder: Jonas, Henry, Dipl.-Ing., 20148 Hamburg (DE); Gumpinger, Thomas, Dipl.-Ing., 21073 Hamburg (DE); Krause, Dieter, Prof. Dr.-Ing., 21244 Buchholz (DE)
(74) Vertreter: Henseler, Daniela

(57) **Zusammenfassung**

Halterung für Inneneinrichtungskomponenten in Flugzeugkabinen mit einem an der Oberseite (2) der Inneneinrichtungskomponente (3) angreifenden Verbindungselement (1), das eine Anbindungsstelle (16, 17) zur Befestigung an einer Rumpfstruktur des Flugzeuges aufweist, wobei als Verbindungselement (1) mindestens eine aufragend angeordnete Winkelstütze (4, 5) vorgesehen ist, die Stützstreben (6, 7; 8, 9) aufweist, die jeweils endseitig an der Oberseite (2) der Inneneinrichtungskomponente (3) über ein Festlager (10, 11; 12, 13) gelenkig angeschlossen und über ein Knotenelement (14, 15) verbunden sind, wobei die Stützstreben (6, 7; 8, 9) mit wählbaren Längen derart an das Knotenelement (14, 15) anschließbar sind, dass durch Längenwahl der Stützstreben (6, 7; 8, 9) die Lage des Knotenelements (14, 15) gegenüber den Festlagern (10, 11; 12, 13) der Stützstreben (6, 7; 8, 9) einstellbar ist, und die Anbindungsstelle (16, 17) am Knotenelement (14, 15) vorgesehen ist.

## Beschreibung

Die Erfindung betrifft eine Halterung für Inneneinrichtungskomponenten in Flugzeugkabinen, insbesondere eine Galley-Halterung, nach dem Oberbegriff des Anspruchs 1.

Aus DE 10 2005 054 890 A1 ist eine Befestigungsstruktur bekannt, mit der sich Inneneinrichtungskomponenten einer Flugzeugpassagierkabine komfortabel fixieren lassen. Üblicherweise werden Inneneinrichtungskomponenten in Flugzeugkabinen fußseitig am oder im Kabinenboden und/oder kopfseitig im Deckenbereich der Kabine befestigt. Zu derartigen Inneneinrichtungskomponenten zählen Hatracks (Gepäckfächer), Galleys (Bordküchen), Stowages (Stauschränke) usw.

Zur kopfseitigen Befestigung wurden in aller Regel an der oberen Rumpfstruktur des Flugzeuges individuell auf die jeweiligen Inneneinrichtungskomponenten und deren Einbauort ausgelegte Stabwerke sowie speziell gefräste Strukturen eingesetzt, die die von den Komponenten hervorgerufenen Belastungen in den Flugzeugrumpf einleiten. Diese herkömmliche Befestigung von Inneneinrichtungskomponenten führte somit zu einer verhältnismäßig unflexiblen Kabinenkonfiguration, die sich nur mit größerem baulichem Aufwand umrüsten ließ. Eine Veränderung der Kabinenkonfiguration führte daher schon aus Gründen der strukturellen Anbindung der Inneneinrichtungskomponenten unter Verwendung der speziell ausgelegten Stabwerke sowie entsprechend gefräster Strukturen zu einer großen Anzahl speziell zu ersetzender Bauteile.

Zum Erreichen einer verhältnismäßig flexiblen kopfseitigen Befestigung von Inneneinrichtungskomponenten in einer Passagierkabine ist daher bekannt, eine Befestigungsstruktur zu verwenden, die zumindest einen Systemträger umfasst, der sich oberhalb des Kabinenbodens zumindest über den Abstand zweier Spante erstreckt. An dem Systemträger wird eine flexible Fixierung der Inneneinrichtungskomponenten ermöglicht, in dem entlang diesem eine Vielzahl an in gleichmäßigen Abständen voneinander beabstandeten Befestigungsmitteln zur Fixierung von Inneneinrichtungskomponenten ausgestaltet ist, wobei die Abstände der Befestigungsmittel kleiner sind als die Abstände der Spante. Indem die Befestigungsmittel beispielsweise einen gegenseitigen Abstand von einem Inch zueinander aufweisen, lassen sich Inneneinrichtungskomponenten inchweise in Längsrichtung der Passagierkabine an beliebigen Stellen fixieren, wodurch eine individuelle und leicht umrüstbare Kabinenkonfiguration sichergestellt werden kann. Die Flexibilität wird durch eine Rasterung erzielt, die durch die an dem Systemträger in gleichmäßigen Abständen voneinander beabstandeten Befestigungsmittel erzeugt wird. Bei den Befestigungsmitteln handelt es sich um Abhängungen mit gabelartig sich aufweitenden Beschlägen, die über Laschen am Systemträger befestigt sind. Die gabelartige Ausbildung mit Aussteifungsstangen verleiht der Befestigungsstruktur die notwendige Steifigkeit.

Nachteilig ist, dass die bekannte Befestigungsstruktur aufwändig ist und die Aufhängung keine feste kopfseitige Fixierung der Inneneinrichtungskomponenten ermöglicht.

Aufgabe der Erfindung ist es daher, eine Halterung für Inneneinrichtungskomponenten in Flugzeugkabinen zu schaffen, die eine flexible kopfseitige Befestigung von Inneneinrichtungskomponenten in einer Flugzeugkabine erlaubt, die eine feste Fixierung ermöglicht.

Diese Aufgabe wird durch die Merkmale des Anspruchs 1 gelöst.

Hierdurch wird eine Halterung für Inneneinrichtungskomponenten in Flugzeugkabinen geschaffen, die durch eine Längenvarianz der Stäbe einer Festlageranordnung eine Lagenvarianz eines Knotenpunktes der Stäbe erzeugt. Eine mit dem Knotenpunkt verbundene Anbindungsstelle ist so zu Anbindungselementen einer Rumpfstruktur des Flugzeuges ausrichtbar.

Die Positionierung der Inneneinrichtungskomponente, beispielsweise einer Galley, ist damit nicht mehr durch eine Rasterung der Anbindungselemente vorgegeben, da die Lage der Anbindungsstelle zur Oberseite der Inneneinrichtungskomponente einstellbar ist. Die Position der Anbindungsstelle ist durch die Längenwahl der Stützstreben frei einstellbar.

Die erfindungsgemäße Halterung ist kostengünstig in der Herstellung und im Einsatz, da als Stützstreben Profilstreben eingesetzt werden können. Hierbei handelt es sich um kostengünstige Meterware. Die erfindungsgemäße Halterung kann aus zwei standardisierten Teilgruppen aufgebaut werden, da die Knotenelemente für alle Winkelstützen identisch sein können. Die durch die erfindungsgemäße Halterung realisierte Flexibilität bezüglich der Positionierung von Inneneinrichtungskomponenten in Flugzeugkabinen ist folglich kombiniert mit einer Minimierung des Kostenaufwandes.

Vorzugsweise ist das Knotenelement ein Gelenk. Dieses Gelenk ist ein durch die Längenvarianz der Stützstreben gegenüber der Oberseite der Inneneinrichtungskomponente verschiebbares Lager, d.h. ein quasi Längenvarianz bestimmtes Loslager.

Weitere Ausgestaltungen und Vorteile der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.
Fig. 1 zeigt schematisch eine perspektivische Ansicht eines ersten Ausführungsbeispiels einer erfindungsgemäßen Halterung,
Fig. 2 zeigt schematisch eine perspektivische Ansicht eines zweiten Ausführungsbeispiels einer erfindungsgemäßen Halterung,
Fig. 3 zeigt schematisch eine perspektivische Ansicht eines dritten Ausführungsbeispiels einer erfindungsgemäßen Halterung,
Fig. 4 zeigt schematisch Längenvariationen der Stützstrebe,
Fig. 5 zeigt schematisch eine perspektivische Ansicht eines vierten Ausführungsbeispiels einer erfindungsgemäßen Halterung.

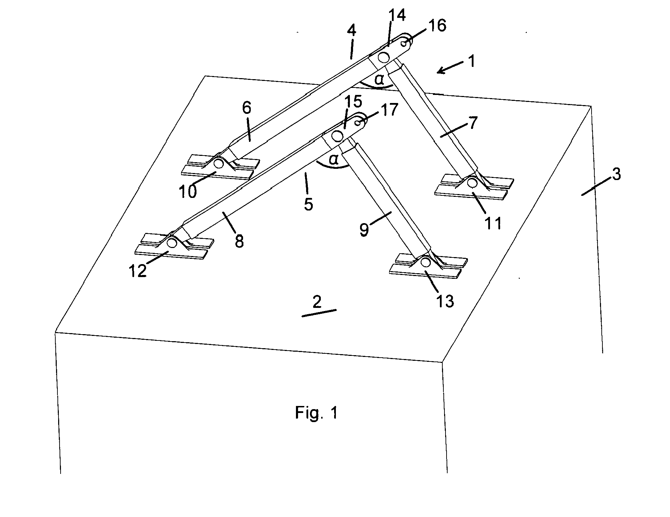

Fig. 1 zeigt eine Halterung für Inneneinrichtungskomponenten in Flugzeugkabinen mit einem an der Oberseite 2 einer Inneneinrichtungskomponente 3 angreifenden Verbindungselement 1.

Als Verbindungselement 1 ist mindestens eine aufragend angeordnete Winkelstütze 4, 5 vorgesehen, die Stützstreben 6, 7 bzw. 8, 9 aufweist, die jeweils endseitig an der Oberseite 2 der Inneneinrichtungskomponente 3 über ein Festlager 10, 11 bzw. 12, 13 gelenkig angeschlossen sind.

An dem dem jeweiligen Festlager 10, 11 bzw. 12, 13 gegenüberliegenden Ende sind die Stützstreben 6, 7 bzw. 8, 9 einer Winkelstütze 4, 5 über ein Knotenelement 14, 15 verbunden. Dabei sind die Stützstreben 6, 7 bzw. 8, 9 mit wählbaren Längen derart an das Knotenelement 14, 15 anschließbar, dass durch Längenwahl der Stützstreben 6, 7 bzw. 8, 9 die Lage des Knotenelements 14, 15 gegenüber den Festlagern 10, 11 bzw. 12, 13 der Stützstreben 6, 7 bzw. 8, 9 einstellbar ist.

Vorzugsweise ist die Längenvarianz der Stützstreben 6, 7 bzw. 8, 9 derart gewählt und aufeinander abgestimmt, dass das Knotenelement 14, 15 beispielsweise in einer zur Oberseite 2 horizontalen Ebene verschiebbar ist. Der von den Stützstreben 6, 7 bzw. 8, 9 eingeschlossene Winkel α ist dazu veränderlich.

Zur Befestigung des Verbindungselementes 1 an einer Rumpfstruktur eines Flugzeuges ist eine Anbindungsstelle 16, 17 am Knotenelement 14, 15 vorgesehen. Wesentlich ist insoweit, dass die Anbindungsstelle 16, 17 der Verschiebung des Knotenelementes 14, 15 durch Längenvariation der Stützstreben 6, 7 bzw. 8, 9 folgt. Die Anbindungsstelle 16, 17 wird beispielsweise von einer Öse oder einer in Fig. 1 gezeigten Lasche mit Befestigungsloch gebildet, die vorzugsweise in einer Flucht mit einer Stützstrebe 6 bzw. 8 liegt.

Die Stützstreben 6, 7 bzw. 8, 9 sind vorzugsweise als Profilstreben ausgebildet. Die Anlenkung an die Festlager 10, 11, 12, 13 und das Knotenelement 14, 15 kann fest oder lösbar erfolgen.

Das Knotenelement 14, 15 ist vorzugsweise als Gelenk ausgebildet. Weiterhin bevorzugt ist, dass jeweils zwei Stützstreben 6, 7 bzw. 8, 9 eine Winkelstütze 4, 5 bilden. Wie Fig. 1 zeigt, ist die Winkelstütze 4, 5 als jeweils ein Dreigelenkbogen ausgebildet. Das Knotenelement 14, 15 bildet dann vorzugsweise ein gegenüber der Oberseite 2 der Inneneinrichtungskomponente 3 verschiebbares Lager, d.h. ein quasi Längenvarianz bestimmtes Loslager.

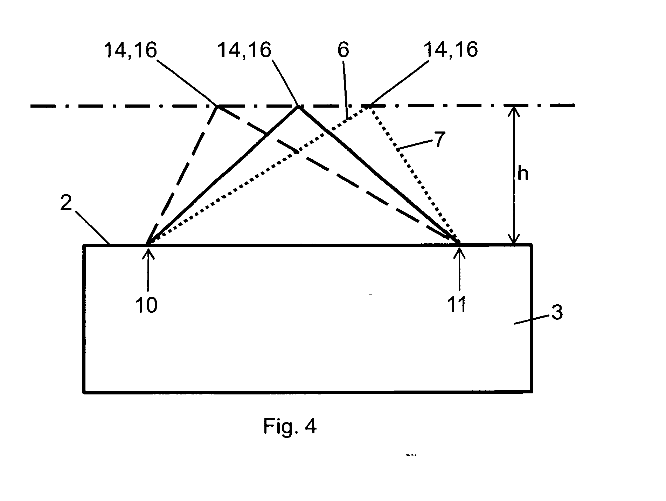

Wie Fig. 4 zeigt, sind die Längen der Stützstreben 6, 7 bzw. 8, 9 unterschiedlich wählbar. Dadurch kann erreicht werden, dass die Anbindungsstelle 16, 17 zu Anschlusselementen (nicht dargestellt) der Rumpfstruktur des Flugzeuges ausrichtbar ist. Die Anbindungsstelle 16, 17 kann durch Längenwahl der Stützstreben 6, 7 bzw. 8, 9 auf einer festlegbaren Höhe h gegenüber der Oberseite 2 der Inneneinrichtungskomponente 3 lageeinstellbar positioniert werden.

Die mechanische Auslegung der Winkelstütze 4, 5 ist in Abhängigkeit von der durch die jeweilige Inneneinrichtungskomponente 3 erzeugten Belastung wählbar.

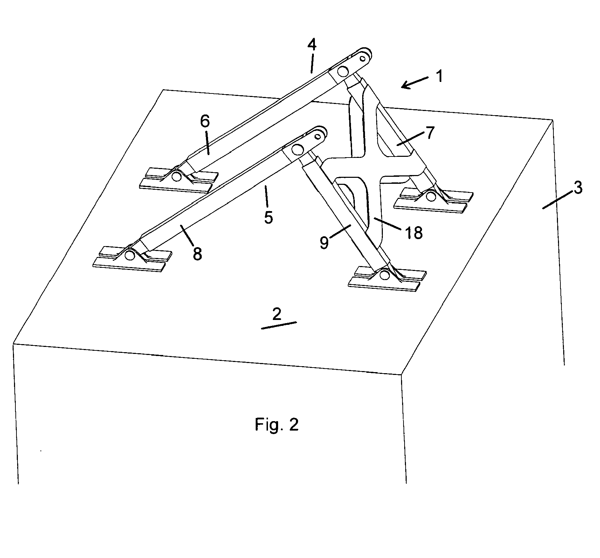

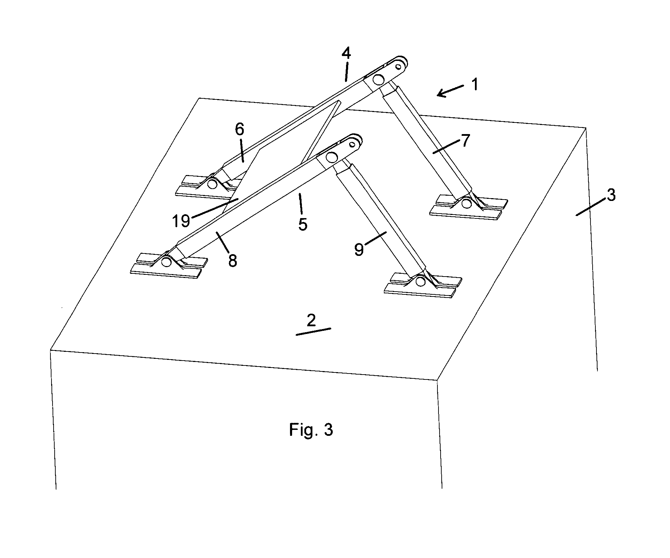

Vorzugsweise sind mindestens zwei parallel angeordnete Winkelstützen 4, 5 vorgesehen. Wie Fig. 2 und Fig. 3 zeigen, können benachbarte Winkelstützen 4, 5 durch jeweils ein Versteifungselement 18, 19 aneinander koppelbar sein.

Die erfindungsgemäße Halterung kann bei den üblichen Inneneinrichtungskomponenten zur kopfseitigen Befestigung verwendet werden. Besonders bevorzugt ist die Verwendung als Galley-Halterung, Toiletten-Halterung, Crewrest-Compartments. Die erfindungsgemäße Halterung eignet sich insbesondere für Inneneinrichtungskomponenten, die höhere Lasten in die Rumpfstruktur einleiten, z.B. aufgrund ihres Gewichtes zuzüglich gegebenenfalls Bestückung.

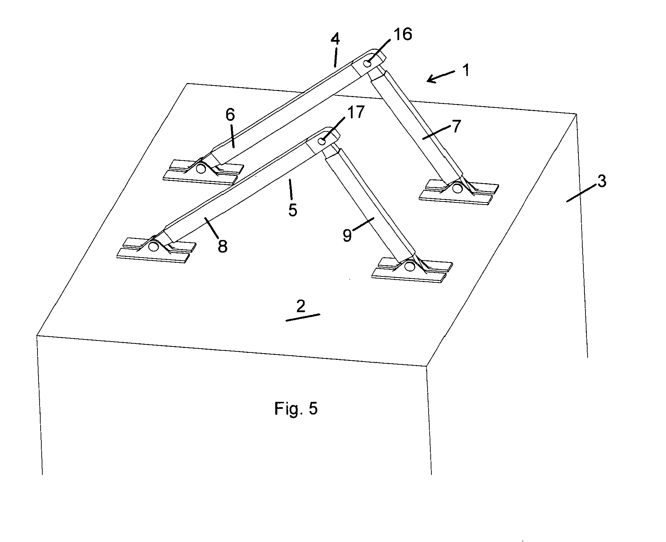

Wie Fig. 5 zeigt, kann die Anbindungsstelle 16, 17 in einem Knotenpunkt des Knotenelements 14, 15 liegen. Verwendbar ist hierfür beispielsweise ein mit einem Auge versehener Bolzen.

Die erfindungsgemäße Halterung kann mit einer fußseitigen Befestigung der Inneneinrichtungskomponenten kombiniert werden. Die Vorteile von beispielsweise eingesetzten Befestigungsschienen können genutzt werden, da eine individuelle Abstimmung auf gewünschte Kabinenkonfigurationen durch eine Längenvariation der Stützstreben 6, 7 bzw. 8, 9 möglich ist.

## Patentansprüche

1. Halterung für Inneneinrichtungskomponenten in Flugzeugkabinen mit einem an der Oberseite (2) der Inneneinrichtungskomponente (3) angreifenden Verbindungselement (1), das eine Anbindungsstelle (16, 17) zur Befestigung an einer Rumpfstruktur des Flugzeuges aufweist, **dadurch gekennzeichnet, dass** als Verbindungselement (1) mindestens eine aufragend angeordnete Winkelstütze (4, 5) vorgesehen ist, die Stützstreben (6, 7; 8, 9) aufweist, die jeweils endseitig an der Oberseite (2) der Inneneinrichtungskomponente (3) über ein Festlager (10, 11; 12, 13) gelenkig angeschlossen und über ein Knotenelement (14, 15) verbunden sind, wobei die Stützstreben (6, 7; 8, 9) mit wählbaren Längen derart an das Knotenelement (14, 15) anschließbar sind, dass durch Längenwahl der Stützstreben (6, 7; 8, 9) die Lage des Knotenelements (14, 15) gegenüber den Festlagern (10, 11; 12, 13) der Stützstreben (6, 7; 8, 9) einstellbar ist, und die Anbindungsstelle (16, 17) am Knotenelement (14, 15) vorgesehen ist.

2. Halterung nach Anspruch 1, **dadurch gekennzeichnet, dass** die Stützstreben (6, 7; 8, 9) als Profilstreben ausgebildet sind.

3. Halterung nach Anspruch 1 oder 2, **dadurch gekennzeichnet, dass** das Knotenelement (14, 15) als Gelenk ausgebildet ist.

4. Halterung nach einem der Ansprüche 1 bis 3, **dadurch gekennzeichnet, dass** die Winkelstütze (4, 5) als Dreigelenkbogen ausgebildet ist.

5. Halterung nach einem der Ansprüche 1 bis 4, **dadurch gekennzeichnet, dass** die Längen der Stützstreben (6, 7; 8, 9) derart gewählt sind, dass die Anbindungsstelle (16, 17) zu Anschlusselementen der Rumpfstruktur des Flugzeuges ausrichtbar ist.

6. Halterung nach einem der Ansprüche 1 bis 5, **dadurch gekennzeichnet, dass** die Anbindungsstelle (16, 17) durch Längenwahl der Stützstreben (6, 7; 8, 9) auf einer festlegbaren Höhe gegenüber der Oberseite (2) der Inneneinrichtungskomponente (3) lageeinstellbar ist.

7. Halterung nach einem der Ansprüche 1 bis 6, **dadurch gekennzeichnet, dass** die mechanische Auslegung der Winkelstütze (4, 5) in Abhängigkeit von der durch die jeweilige Inneneinrichtungskomponente (3) erzeugten Belastung wählbar ist.

8. Halterung nach einem der Ansprüche 1 bis 7, **dadurch gekennzeichnet, dass** mindestens zwei parallel angeordnete Winkelstützen (4, 5) vorgesehen sind, die durch ein Versteifungselement (18, 19) aneinander koppelbar sind.
